# EUROPEAN PATENT APPLICATION

(11) **EP 3 690 207 A1**
(43) Date of publication of application: **05.08.2020**
(21) Application number: 17926408.0
(22) Date of filing: 31.10.2017
(51) Int. Cl.: F01P 5/04, F01P 5/12

(54) **COOLING MODULE AND INTELLIGENT VEHICLE COOLING SYSTEM**

(30) Priority: 29.09.2017 CN 201710911743
(71) Applicant: Suzhou Yili Technology Co., Ltd., Suzhou, Jiangsu 215121 (CN)
(72) Inventor: JIANG, Jian, Suzhou Jiangsu 215121 (CN); ZUO, Zhi, Suzhou Jiangsu 215121 (CN); LIU, Ye, Suzhou Jiangsu 215121 (CN)
(74) Representative: Dr. Gassner & Partner mbB
(86) International application number: PCT/CN2017/108535
(87) International publication number: WO 2019/061643

(57) **Abstract**

A cooling module (100), comprising a fan (20) and a water pump (22). The fan (20) comprises a motor (26) and fan blades driven by the motor (26); the motor (26) is provided with a motor shaft (28); the fan blades are mounted on the motor shaft (28); the water pump (22) comprises a pump head (30), an impeller (32) accommodated in the pump head (30), and a water inlet pipe (58) and water outlet pipe (60) which are connected to the pump head (30); a through hole (36) is formed on the pump head (30); the motor shaft (28) penetrates the through hole (36) to extend into the pump head (30); and the impeller (32) is mounted on the motor shaft (28) and is driven by the motor (26). Since the fan blades of the fan (20) and the impeller (32) of the water pump (22) are driven by the same motor (26), the cooling module (100) has a simple structure. Also provided is an intelligent vehicle cooling system provided with the cooling module (100).

## Description

### CROSS-REFERENCE TO RELATED APPLICATION

This application claims the priority benefit of China application No. 201710911743.8, filed on September 29, 2017 and entitled "Cooling Assembly And Intelligent Vehicle Cooling System". The entirety of the above-mentioned patent application is hereby incorporated by reference herein and made a part of this specification.

### TECHNICAL FIELD

The present application relates to a cooling assembly used in an intelligent vehicle cooling system. Further, this application relates to an intelligent vehicle cooling system.

### BACKGROUND

In conventional intelligent cooling system, a pump and a motor are essential components. The blower includes blades, a fan housing, a motor and the like. The pump includes a pump head, a motor and the like. Both pump and blower need motors. Blades of the blower are driven by the motor to rotate. The impeller of the pump is driven by the motor to rotate. If they share a single motor, the cost of the whole cooling system is greatly decreased.

In the prior art, the pump and the blower are respectively provided with a motor. The two motors are independent from each other. Chinese Patent Application No.CN201710644449.5, a prior patent application by the applicant, discloses an integrated structure in which the pump and the blower are connected by a flange member. Specifically, the upper end surface and the lower end surface of the flange member are respectively provided with a pulley. The motor shaft and the pump shaft penetrate through the corresponding pulleys. A belt is arranged between the two pulleys for transmission. Therefore, the fan of the blower and the impeller of the pump are driven by the same motor, so as to reduce the cost and the installation space. However, there are flange member, pulleys, belt and the like in the structure. It is urgent to solve the problem of structure optimization.

### SUMMARY

The objective of this application is to provide a cooling assembly having a simpler structure, in which the blades of the blower and the impeller of the pump are driven by a single motor.

To achieve the above objective, the present application provides a cooling assembly comprises a blower and a pump. The blower includes a motor and blades driven by the motor. The motor has a motor shaft. The blades are mounted on the motor shaft. The pump includes a pump head, an impeller accommodated in the pump head, and an inlet pipe and an outlet pipe which are connected to the pump head. The pump head is provided a through hole, through which the motor shaft extends into the pump head. The impeller is mounted on the motor shaft and driven by the motor. Further, the through hole is a shaft seal through hole.

Further, the pump head comprises a main body and a mounting plate removably connected to the main body, the impeller is accommodated in the main body, the through hole is arranged in the mounting plate, the main body is provided with an opening, and the opening is closed by the mounting plate.

Further, The mounting plate is provided with at least two blower connection portions for connection with the blower. The at least two blower connection portions are spaced from one another.

Further, the mounting plate is provided with a concave part that is located between two adjacent blower connection portions and extends toward the through hole.

Further, the mounting plate is removably connected to an inner ring of the blower.

Further, the mounting plate is provided with a pump, on which a seal ring is mounted.

Further, a mating lid is arranged at a side of the pump head that is away from the blower, and the inlet pipe and the outlet pipe are located within the range of the blower and the mating lid in the axial direction of the motor shaft.

Further, the axis of the inlet pipe lies in a plane perpendicular to the motor shaft.

Compared with conventional art, the beneficial effects of the present application are as follow. In the cooling assembly of this embodiment of the present application, the blades of the blower and the impeller of the pump are driven by the same motor, thereby obtaining a simple and low-cost structure, and reducing the installation space of the cooling assembly. More preferably, in this embodiment, the impeller is directly mounted on the motor shaft and driven by the motor. Further, there is no transmission mechanism provided between the motor and the impeller, such that the structure is simpler, and the cost is lower. In addition, the abrasion of the transmission mechanism is avoided such that the life of the cooling assembly is prolonged.

The other objective of the present application is to provide an intelligent vehicle cooling system that includes any one of the above cooling assemblies.

Compared with conventional art, the beneficial effects of the present application are as follow. The above cooling assembly has such characteristics as simple structure, small size, low cost, and long life. Therefore, the intelligent vehicle cooling system of the present application also has such characteristics as simple structure, small size, low cost, and long life.

### BRIEF DESCRIPTION OF DRAWINGS

FIG. 1 is an exploded schematic view showing a cooling assembly of the embodiment of the present application; and
FIG. 2 is a top view showing a mounting plate as shown in FIG. 1 in the direction from a pump to a blower, and further showing an impeller.

Exemplary embodiments of the present application will now be described in detail with reference to the accompanied drawings in an illustrative and non-limiting way. In the drawings, the same reference numerals denote the same or similar elements. Those skilled in the art should understand that the drawings are not necessarily drawn to scale.

### DETAILED DESCRIPTION

The present application will now be described in details in conjunction with the specific embodiments as shown in the accompanied drawings. The present application is not to be limited in scope by the specific embodiments. Various changes of structure, method or function made by those skilled in the art according to the embodiments fall within the scope of this application.

In the present application, unless expressly indicated otherwise, the terms "connection", "connected", and the like should be interpreted broadly. For example, it can be fixed connection, removable connection, or integrated. In addition, it can be direct connection or indirect connection via a medium; or, communication between two elements or interaction between two elements. For those skilled in the art, the meanings of the terms in the present application can be understood on the basis of specific situation.

In the present application, unless expressly indicated otherwise, the terms "connection", the structure wherein the first feature is "on" or "under" the second feature can include an embodiment where the first feature is in direct contact with the second feature, and can further include an embodiment where the first feature may not be in direct contact with the second feature or another feature is formed between the first feature and the second feature.

In the present application, unless expressly indicated otherwise, the terms "axial direction" is the extending direction of the motor shaft 28 of the fan 20.

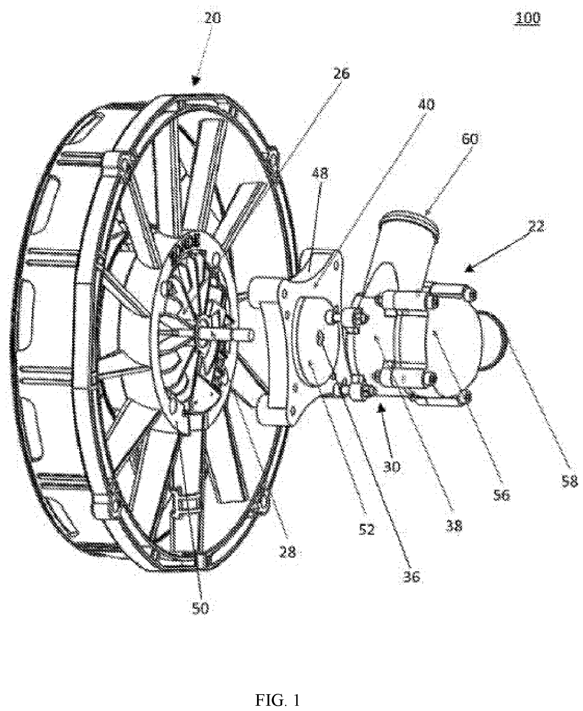

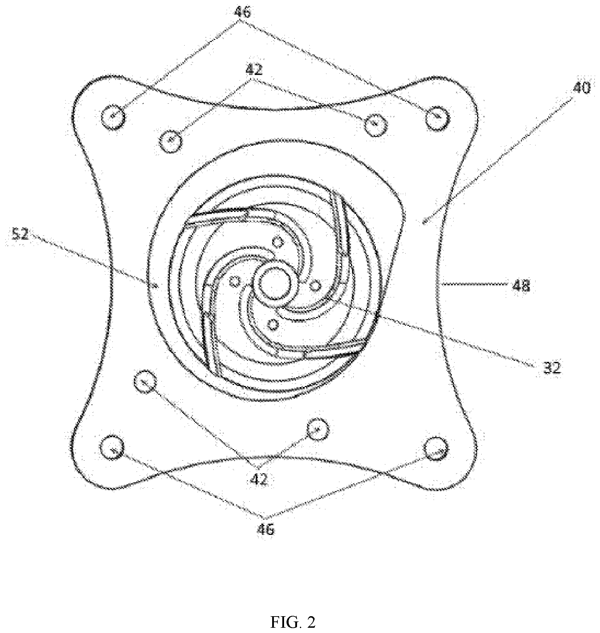

As shown in FIG. 1 and FIG. 2, the embodiment of the present application shows a cooling assembly 100 that is used in an intelligent vehicle cooling system for cooling the engine. Obviously, a person skilled in the art will understand the cooling assembly 100 can also be used in other cooling systems. Any technical solution that is the same or similar to this embodiment should be included in the protective scope of this application.

Preferably, in this embodiment, the cooling assembly 100 includes a blower 20 and a pump 22. The blower 20 includes a motor 26 and blades driven by the motor 26. The motor 26 has a motor shaft 28. The blades are mounted on the motor shaft 28. The pump 22 includes a pump head 30, an impeller 32 accommodated in the pump head 30. A through hole 36 is arranged in the pump head 30. The motor shaft 28 extends into the pump head 30 through the through hole 36. The impeller 32 is mounted on the motor shaft 28 and is driven by the motor 26.

Therefore, in the cooling assembly 100 of this embodiment of the present application, the blades of the blower 20 and the impeller 32 of the pump 22 are driven by the same motor 26, thereby obtaining a simple and low-cost structure, and reducing the installation space of the cooling assembly 100. More preferably, in this embodiment, the impeller 32 is directly mounted on the motor shaft 28 and is driven by the motor 26. Further, there is no transmission mechanism provided between the motor 26 and the impeller 32, such that the structure is simpler, and the cost is lower. In addition, the abrasion of the transmission mechanism is avoided such that the life of the cooling assembly 100 is prolonged.

In this embodiment, the blower 20 further includes a fan housing for the blades. The motor 26 is arranged between the blades and an interlayer structure of the fan housing. The structure of the blower 20 is the same as that of the prior art and will not be described herein.

Preferably, in this embodiment, the through hole 36 is a shaft seal through hole 36.

The shaft seal through hole 36 can prevent the water that flows through the pump 22 from flowing into the blower 20 through the through hole 36, thus preventing the blower 20, in particular the motor 26 from being damaged by water, so as to prolong the life of the whole cooling assembly 100.

Preferably, in this embodiment, the pump head 30 includes a main body 38 and a mounting plate 40 removably connected to the main body 38. The impeller 32 is accommodated in the main body 38. The through hole 36 is arranged in the mounting plate 40. The pump head 38 is provided with an opening that is closed by the mounting plate 40.

The mounting plate 40 is removably connected to the main body 38, such that the through hole 36 can be conveniently formed in the mounting plate 40. When the impeller 32 is mounted on the motor shaft 28, the opening formed in the main body 38 is convenient for user to observe whether the impeller 32 is aligned with the motor shaft 28, so as to make the installation of the impeller 32 more convenient and faster. The water of the pump 22 is prevented from being splashed on the motor 26 since the opening is closed by the mounting plate 40. The cooling assembly 100 of this embodiment is good design, and convenient and fast for installation.

The mounting plate 40 is provided with four pump head connection portions 42, which are arranged to be spaced from one another and can securely fix the mounting plate 40 on the main body 38 of the pump head 40. A person skilled in the art will understand the number of the pump head connection portions 42 can be determined as desired. Any technical solution that is the same or similar to this embodiment should be included in the protective scope of this application.

In this embodiment, the mounting plate 40 and the main body 38 of the pump head 30 are fixed by fixing screw, and the pump head connection portions 42 in the mounting plate 40 may be threaded holes for passing the fixing screws. It is apparent to those skilled in the art that the mounting plate 40 and the main body 38 of the pump head 30 are fixed by other means, and the structure of the pump head connection portions 42 can be changed correspondingly. Any technical solution that is the same or similar to this embodiment should be included in the protective scope of this application.

Preferably, the mounting plate 40 is removably connected to the blower 20, and the mounting plate 40 is provided with at least two blower connection portions 46 for connection with the blower 20. The at least two blower connection portions 46 are arranged to be spaced from each other.

The mounting plate 40 is removably connected to the blower 20, while the mounting plate 40 can be regarded as a part of the pump 22. That is to say, the pump 22 is removably connected to the blower 20. Therefore, the cooling assembly 100 of the embodiment has a compact structure to reduce the volume required for installing the cooling assembly, such that a larger space is provided for designing the intelligent vehicle cooling system.

In this embodiment, the mounting plate 40 is provided with four blower connection portions 46, which are distributed in a generally rectangular shape and are arranged to be spaced from one another. Therefore, the mounting plate 40 can be securely fixed on the pump head 20. A person skilled in the art will understand the number of the pump head connection portions 46 can be determined as desired. Any technical solution that is the same or similar to this embodiment should be included in the protective scope of this application.

In this embodiment, the mounting plate 40 and the pump head 20 are fixed by fixing screw, and the blower connection portions 46 in the mounting plate 40 may be threaded holes for passing the fixing screws. It is apparent to those skilled in the art that the mounting plate 40 and the blower 20 are fixed by other means, and the structure of the blower connection portions 46 can be changed correspondingly. Any technical solution that is the same or similar to this embodiment should be included in the protective scope of this application.

The mounting plate 40 is provided with four pump head connection portions 42 and four blower connection portions 46. In this embodiment, the four blower connection portions 46 are configured to encircle the four pump head connection portions 42, thereby obtaining a proper arrangement.

Preferably, in this embodiment, the mounting plate 40 is provided with a concave part 48 that is located between two adjacent blower connection portions 46 and extends toward the through hole 36.

The concave part 48 can decrease the area of the motor 26 that is occluded by the mounting plate 40, and increase the heat dissipating area of motor 26, thereby prolonging the life of motor 26. Therefore, the life of the whole cooling assembly 100 is prolonged.

Specifically, in this embodiment, a concave part 48 is formed between two adjacent blower connection portions (threaded holes) 46, and the connection surface between the two adjacent blower connection portions 46 is arc-shaped concave surface. It will be apparent to those skilled in the art that a plurality of concave parts 48 are formed between two adjacent blower connection portions (threaded holes) 46, and the connection surface between the two adjacent blower connection portions 46 can be wave shaped. Any technical solution that is the same or similar to this embodiment should be included in the protective scope of this application.

Preferably, in this embodiment, the mounting plate 40 is removably connected to an inner ring 50 of the blower 20.

The mounting plate 40 is connected with the inner ring 50 of the blower 20, which reasonably utilize the structure of the blower 20, thereby obtaining a reasonable structural design.

Preferably, in this embodiment, the mounting plate 40 is provided with a pump 52, on which a seal ring is mounted.

The bump 52 facilitates easier installation of the seal ring, and the seal ring can prevent the water in the pump 22 from flowing out to avoid the damage of the motor 26, which is a well designed structure and convenient for installation.

Preferably, in this embodiment, a mating lid 56 is arranged at a side of the pump head 30 that is away from the blower 20. The inlet pipe 58 and the outlet pipe 60 are arranged between the blower 20 and the mating lid 56 in the axial direction of the motor shaft 28.

In the conventional art, each of the blower and the pump is driven by an independent motor, the inlet pipe of the pump extend generally in the axial direction of the pump shaft, and the outlet pipe extends in the direction perpendicular to the pump shaft. However, in this embodiment, since the impeller 32 of the pump 22 is mounted on the motor shaft 28 of the blower 20, the pump 22 needs to be arranged between the blower 20 and water tank (not shown). The distance between the blower 20 and the water tank is limited. In order to arrange the pump 22 in the limited space, the mating lid 56 is provided in the embodiment. The inlet pipe 58 and the outlet pipe 60 are arranged between the blower 20 and the mating lid 56 in the axial direction of the motor shaft 28, such that the axial length of the pump 22 is reduced. Therefore, the occupied lateral space is reduced, such that the pump 22 can be arranged between the blower 20 and the water tank to make the overall structure of the cooling assembly 100 compact.

It should be noted that: the embodiment only defines that the inlet pipe 58 and the outlet pipe 60 are located between the blower 20 and the mating lid 56 in the axial direction of the motor shaft 28; and in other directions, for example in the direction perpendicular to the motor shaft 28, the inlet pipe 58 and/or the outlet pipe 60 can be located external to the blower 20 and/or the mating lid 56. Any technical solution that is the same or similar to this embodiment should be included in the protective scope of this application.

In this embodiment, the mating lid 56 and the pump head 30 are respectively provided with thread holes. The mating lid 56 and the pump head 30 are fixedly connected by fixing screw. It is apparent to those skilled in the art that the mating lid 56 and the pump head 30 can be fixed by other means. Any technical solution that is the same or similar to this embodiment should be included in the protective scope of this application.

Preferably, in this embodiment, the axis of the inlet pipe 58 lies in the plane perpendicular to the motor shaft 28.

It should be noted that, in this embodiment, the inlet pipe 58 is a water inlet pipe that is directly connected to the pump head 30 and extends in a straight line, while the outlet pipe 60 is a water outlet pipe that is directly connected to the pump head 30 and extends in a straight line. Taking the inlet pipe 58 as an example, the inlet pipe that extends in a straight line can be long or short. In the case that the inlet pipe 58 extends in a curved line, there is necessarily an inlet pipe that extends in a straight line and is directly connected to the pump head 30 when the inlet pipe 58 is divided into extremely small segments. In the case that the inlet pipe extends in a straight line, there is necessarily an axis that extends in a straight line. Similarly, the outlet pipe 60 necessarily has an axis that extends in a straight line.

The axis of the inlet pipe 58 lies in the plane perpendicular to the motor shaft 28. The axial length of the pump 22 can be decreased to reduce the occupied lateral space, such that the pump 22 can be arranged between the blower 20 and the water tank to make the overall structure of the cooling assembly 100 compact.

Preferably, in this embodiment, the axes of the inlet pipe 58 and the outlet pipe 60 lie in the same plane perpendicular to the motor shaft 28. Therefore, the pump 22 has rational structure and is of reasonable design.

While the application is described in conjunction with the embodiments, it will be understood that not every embodiment comprises only one independent technical solution. The way of describing the application is only for clarity. Those skilled in the art will readily understand that the application should be regarded as a whole, and the technical solutions in the embodiments can be combined in any appropriate manner to form other embodiments which can be understood by those skilled in the art.

What are described above are merely preferred embodiments of the present application, and are not to limit the present application, and any modification, equivalent and improvement within the spirit and principles of the present application shall be covered in the protective scope of the present application.

## Claims

1. A cooling assembly, comprising a blower and a pump, wherein
the blower comprises a motor and blades driven by the motor,
the motor has a motor shaft, and the blades are mounted on the motor shaft, and
the pump comprises a pump head, an impeller accommodated in the pump head, and an inlet pipe and an outlet pipe which are connected to the pump head,
**characterized in that** the pump head is provided a through hole, through which the motor shaft extends into the pump head, and the impeller is mounted on the motor shaft and driven by the motor.

2. The cooling assembly according to claim 1, wherein the through hole is a shaft seal through hole.

3. The cooling assembly according to claim 1, wherein
the pump head comprises a main body and a mounting plate removably connected to the main body,
the impeller is accommodated in the main body,
the through hole is arranged in the mounting plate, and
the main body is provided with an opening, and the opening is closed by the mounting plate.

4. The cooling assembly according to claim 3, wherein
the mounting plate is removably connected to the blower, and
the mounting plate is provided with at least two blower connection portions for connection with the blower, and the at least two blower connection portions are arranged to be spaced from each other.

5. The cooling assembly according to claim 4, wherein the mounting plate is provided with a concave part between two adjacent blower connection portions, which extends toward the through hole.

6. The cooling assembly to claim 4, wherein the mounting plate is removably connected to an inner ring of the blower.

7. The cooling assembly to claim 3, wherein the mounting plate is provided with a bump, on which a seal ring is mounted.

8. The cooling assembly according to claim 1, wherein a mating lid is arranged at a side of the pump head that is away from the blower, and the inlet pipe and the outlet pipe are located within the range of the blower and the mating lid in the axial direction of the motor shaft.

9. The cooling assembly according to claim 1, wherein the axis of the inlet pipe lies in a plane perpendicular to the motor shaft.

10. An intelligent vehicle cooling system, **characterized in that** the intelligent vehicle cooling system is provided with the cooling assembly according to claim 1.
